(19) Europäisches Patentamt
European Patent Office
Office européen des brevets

(11) Veröffentlichungsnummer: **0 096 799**
**B1**

(12) # EUROPÄISCHE PATENTSCHRIFT

(45) Veröffentlichungstag der Patentschrift: **06.08.86**

(51) Int. Cl.⁴: **C 08 G 79/02**

(21) Anmeldenummer: **83105363.2**

(22) Anmeldetag: **31.05.83**

(54) **Phosphorhaltige Polyarylenester und Verfahren zu ihrer Herstellung.**

(30) Priorität: **16.06.82 DE 3222571**

(43) Veröffentlichungstag der Anmeldung: **28.12.83 Patentblatt 83/52**

(45) Bekanntmachung des Hinweises auf die Patenterteilung: **06.08.86 Patentblatt 86/32**

(84) Benannte Vertragsstaaten: **DE FR GB IT NL**

(56) Entgegenhaltungen:
**DE - A - 2 925 206**
**FR - A - 2 310 375**

**KOBUNSHI KAGAKU (Japanese Polymer Science and Technology), English Edition, Vol. 2, No. 9, 1973 S. HASHIMOTO et al., "Synthesis and Properties of Phosphorus-Containing Polyesters Prepared from Bis (p-hysroxyphenyl)methyl- or phenyl-phosphine Oxide"**

(73) Patentinhaber: **Röhm GmbH, Kirschenallee Postfach 4242, D-6100 Darmstadt 1 (DE)**

(72) Erfinder: **Besecke, Siegmund, Dr., Dipl.-Chem., Auf dem Kreuzberg 6, D-6104 Seeheim-Jugenheim (DE)**
Erfinder: **Schröder, Günter, Dr., Dipl.-Chem., Leipziger Strasse 7, D-6105 Ober-Ramstadt (DE)**
Erfinder: **Ude, Werner, Dr., Dr.-Ing., Falkenstrasse 10, D-6100 Darmstadt-Arheilgen (DE)**
Erfinder: **Wunderlich, Winfried, Dr., Dipl.-Chem., Spessartring 11, D-6101 Rossdorf (DE)**

**EP 0 096 799 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Gebiet der Erfindung

Die Erfindung betrifft phosphorhaltige Polyarylenester, die als hoch temperaturbeständige und schwerbrennbare thermoplastische Kunststoffe von Interesse sind.

Stand der Technik

Aus der DE-OS 29 25 206 sind Polyesterphosphonate bekannt, die hinsichtlich ihrer Eigenschaften zur gleichen Kunststoffklasse gehören. Sie sind jedoch durch den Gehalt an Phosphonestergruppen verhältnismässig leicht hydrolytisch spaltbar.

Phosphorhaltige Polyarylenester sind in JP-OS 81 65020 und in einer Arbeit von H. Kondo et al. (European Polymer Journal, Vol. 17, 1981, S. 583–588) beschrieben. Sie enthalten die Phosphoratome in 5- oder 6-gliedrigen Ringstrukturen, die das Polymermolekül stark versteifen. Dies führt zu hohen Erweichungstemperaturen, die die Verarbeitung nahe an der Zersetzungstemperatur erforderlich machen.

S. Hashimoto et al. (Kobunshi Kagaku, Eng. Ed., Vol. 2, Nr. 9, 1973, S. 826–834) haben phosphorhaltige Polyarylenester der Struktur

$$-[O-A-O-CO-B-CO]_n-$$

durch Schotten-Baumann-Kondensation von aliphatischen oder aromatischen Carbonsäurechloriden ClCO–B–COCl, wobei B einen aliphatischen oder aromatischen Rest bedeutet, mit phosphorhaltigen Bisphenolen HO–A–OH, wobei A einen Rest der Struktur

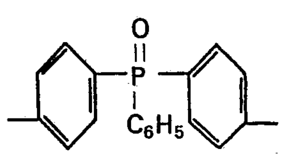

bedeutet, hergestellt. Die erhaltenen Polyarylenester neigen zum Kristallisieren, wodurch die Schmelztemperatur erhöht wird. Die Schmelztemperatur des Polyarylenesters mit dem oben beschriebenen Aufbau, wobei B para-Phenylengruppen sind, liegt bei etwa 300 °C. Dagegen liegt die Schmelztemperatur eines Co-Kondensats, bei dem etwa 30% der Gruppen A durch Reste des Bisphenols A ersetzt sind, nur bei etwa 250 °C. Diese für die Verarbeitbarkeit erwünschte, allerdings noch nicht ausreichende Verminderung der Schmelztemperatur muss mit einer Verminderung des Phosphorgehalts um 28% erkauft werden.

Aufgabe und Lösung

Die Schmelztemperatur von phosphorhaltigen Polyarylenestern sollte weiter vermindert werden, ohne gleichzeitig den Phosphorgehalt herabzusetzen. Angestrebt werden amorphe, thermoplastisch verarbeitbare Kunststoffe ohne teilkristalline Bereiche mit Glastemperaturen nicht über 200 °C. Dieses Ziel wird erfindungsgemäss dadurch erreicht, dass die Glieder B aus wenigstens zwei verschiedenen oder aus verbrückten aromatischen Resten bestehen. Erfindungsgegenstand sind daher phosphorhaltige Polyarylenester der Struktur

$$-[O-A-O-CO-B-CO]_n-$$

worin A wenigstens zum Teil Glieder der Struktur I

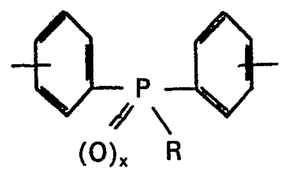

I

in der R einen niederen Alkylrest, einen Aryl- oder Aralkylrest, x = 0 oder 1 bedeuten und die Arylgruppen gegebenenfalls weitere Substituenten tragen können, und gegebenenfalls zum übrigen Teil Glieder der für B angegebenen Struktur sind, und worin B für wenigstens zwei verschiedene Reste aus der Gruppe

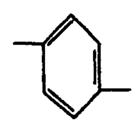

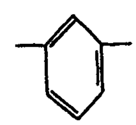

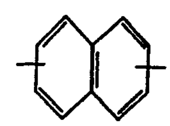

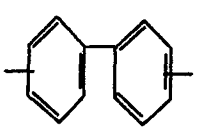

steht, oder für wenigstens einen Rest der Struktur

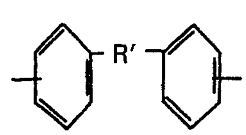

steht, worin R′ ein Sauerstoffatom, ein Schwefelatom, eine Sulfonyl, Carbonyl- oder Isopropyliden-Brückengruppe darstellt, und n einen Mittelwert über 20 bedeutet und der Phosphorgehalt über 1 Gew.-% liegt.

Vorteile

Einer der erfindungsgemässen Polyarylenester z.B.

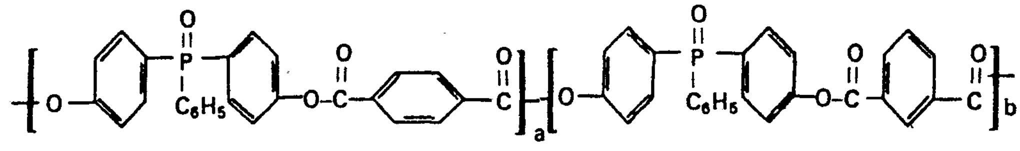

mit einem Verhältnis a:b=1:1 hat einen Phosphorgehalt von 7,2 Gew.-% und eine Glastemperatur von 175 °C, während der Polyarylenester

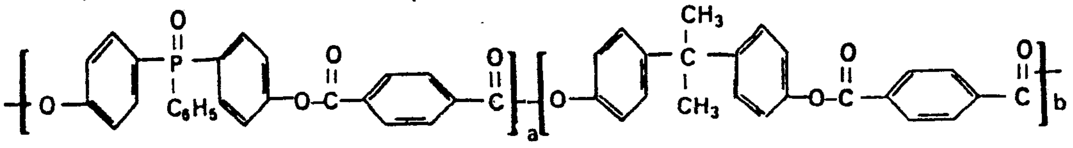

gemäss dem bekannten Stand der Technik bei einem Verhältnis a:b=70/30 eine Schmelztemperatur von 250 °C und einen Phosphorgehalt von 5,2 Gew.-% aufweist. Wegen der immer noch kristallinen Struktur kann der zuletzt genannte Polyarylenester nicht durch eine Glastemperatur, sondern nur durch eine Schmelztemperatur charakterisiert werden. Der höhere Phosphorgehalt der erfindungsgemässen Polyarylenester führt zu einem günstigeren Brandverhalten, die niedrige Glastemperatur zu verbesserten Verarbeitungseigenschaften.

Die erfindungsgemässen Polyarylenester zeichnen sich gegenüber denen, die jeweils nur eine Art von Gruppen A und B enthalten, durch eine deutlich verminderte Kristallisationsneigung aus. Dies ist auf eine Störung des kristallinen Gefüges zurückzuführen, die wiederum auf einer verminderten Periodizität des Kettenaufbaus beruht.

Gewerbliche Verwertbarkeit

Die neuen Polyarylenester können im thermoplastischen Zustand unterhalb ihrer thermischen Zersetzungstemperatur im Temperaturbereich von etwa 200 bis 380 °C zu Folien, Fasern, Profilen oder sonstigen Formkörpern verformt werden, die sich durch gute Selbstlöscheigenschaften auszeichnen.

Das Bis-phenol HO–A–OH,

das am Aufbau der erfindungsgemässen Polyarylenester beteiligt ist, besteht wenigstens zum Teil aus Verbindungen der Struktur

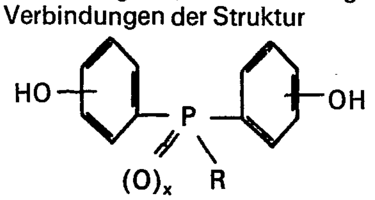

R kann z.B. eine Methyl-, Chlormethyl-, Benzyl- oder Phenylgruppe sein. Methyl und Phenyl sind bevorzugt. Die aromatischen Reste der Verbindung können gegebenenfalls weitere Substituenten, wie anellierte aromatische Ringsysteme, Methylgruppen oder Halogenatome, insbesondere Brom oder Chlor, tragen. Die phenolischen Hydroxylgruppen stehen vorzugsweise in p-Stellung zum Phosphoratom. Die oxydierte Form der Verbindung, für die x = 1 gilt, ist bevorzugt.

Ein Teil der phosphorhaltigen Gruppen A kann durch die für B genannten phosphorfreien Gruppen ersetzt sein. Dadurch wird zwar der Phosphorgehalt des Polyarylenesters vermindert, aber gleichzeitig die Kristallisationsneigung noch weiter herabgesetzt. Der Anteil der phosphorfreien Gruppen A ist dadurch begrenzt, dass der Phosphorgehalt nicht weniger als 1 Gew.-% betragen darf. Er liegt vorzugsweise über 2 Gew.-%; im Regelfall sogar über 4 und insbesondere bei 5 bis 7 Gew.-%. Vorzugsweise liegt der Anteil der phosphorhaltigen Gruppen A über 50 Mol-%, insbesondere über 70 Mol-% der Gesamtheit der Gruppen A.

Die Dicarbonsäuren HOCO–B–COOH,

die den Polyarylenestern formal zugrundeliegen und die für deren vorteilhafte Eigenschaften wesentlich sind, sind entweder über Brückenglieder R' verbundene mehrkernige aromatische Dicarbonsäuren oder, wenn sie nicht diesen Aufbau haben, stets Gemische von zwei oder mehr der anderen formelmässig bezeichneten Carbonsäuren. Der schmelztemperatursenkende Effekt wird im allgemeinen schon mit zwei verschiedenen Säuren der zuletzt genannten Art voll erreicht. Der Effekt wird durch deutliche Strukturunterschiede zwischen den beteiligten Gruppen B gefördert. So ist z.B. das Gemisch aus Terephthalsäure und Isophthalsäure sehr wirksam. Der Anteil jeder beteiligten Art von Resten B soll vorzugsweise nicht unter 10 Mol-%, bezogen auf die Gesamtheit der Reste B, liegen. Anteile von 25 bis 75 Gew.-% sind bevorzugt, insbesondere das Verhältnis 50:50.

Die Herstellung der Polyarylenester

erfolgt grundsätzlich nach der im Anspruch 2 angegebenen Arbeitsweise. Besonders zweckmässig ist die Schotten-Baumann'sche Reaktion zwischen den Bisphenolen HO–A–OH und den Dicarbonsäuredichloriden ClCO–B–COCl in Gegenwart einer wenigstens äquivalenten Menge einer Base in einem geeigneten Lösungsmittel. Als Lösungsmittel eignen sich z.B. aliphatische Chlorkohlenwasserstoffe, wie Methylenchlorid, Chloroform, Tetrachloräthylen, Tetrachloräthan, oder aromatische Kohlenwasserstoffe, wie Toluol. Als Basen können z.B. Natrium- oder Kaliumhydroxyd, Pyridin und Triäthylamin verwendet werden. Die Reaktionstemperatur liegt beispielsweise zwischen 0 und 150 °C, vorzugsweise bei 20 bis 100 °C.

Um ein hohes Molekulargewicht und damit gute Kunststoffeigenschaften zu erreichen, werden die Ausgangsverbindungen in möglichst hoher Reinheit eingesetzt. Insbesondere sollen monofunktionelle Verunreinigungen fehlen, die an der Reaktion teilnehmen, aber kettenabbrechend wirken. Aus dem gleichen Grund muss das Molverhältnis der Bisphenole zu der Gesamtheit der Dicarbonsäurederivate sehr nahe bei 1:1 liegen, was aus der Chemie der Polykondensationsreaktionen allgemein bekannt ist. Das Molekulargewicht der Polyarylenester liegt vorzugsweise nicht unter 10 000, vorzugsweise im Bereich von 20 000 bis 80 000. Um diese Molekulargewichte zu erreichen, sind Kondensationszeiten von 0,1

bis 10 Stunden erforderlich. Häufig lassen sich die Kunststoffeigenschaften, vor allem die Festigkeitswerte der Produkte, durch eine Nachkondensation von 10 bis 90 min Dauer bei 250 bis 350 °C, gegebenenfalls im Vakuum, weiter verbessern. Die entstehenden linearen Makromoleküle enthalten in der Regel Hydroxyl- bzw. Carboxylgruppen als Endgruppen, die gewünschtenfalls nachträglich veräthert bzw. verestert werden können. Man kann auch gezielte kleine Mengen monofunktioneller Phenole oder Carbonsäuren zur Bildung von Endgruppen zusetzen.

Die entstehenden Polymermoleküle bleiben im Regelfall bei der Kondensation gelöst, während das Hydrochlorid der Base ausfällt und abfiltriert werden kann. Das Polymerisat kann z.B. durch Ausfällung mit einem Nichtlöser oder durch Verdampfen des Lösungsmittels gewonnen werden.

Weitere Möglichkeiten zur Synthese der neuen Polyarylenester sind die literaturbekannten Kondensationsverfahren, z.B. die Schmelzkondensation durch Umsetzung der entsprechenden Bisphenol-diacetate und Dicarbonsäuren oder Umsetzung der Bisphenole mit Dicarbonsäurediphenylestern. Nachteilig ist bei diesen Methoden das lange Erhitzen der Kondensationsansätze auf hohe Temperaturen, die 350 °C während 10 Stunden erreichen können, sowie die Notwendigkeit, aus den hochviskosen Reaktionsgemischen die bei der Kondensation abgespaltenen niedermolekularen Verbindungen abzudestillieren.

Beispiel 1

0,015 Mol Dihydroxy-triphenylphosphinoxid, 0,035 Mol Bisphenol O (Dihydroxy-diphenyläther) und 2,4 Mol Pyridin wurden in 500 ml Tetrachloräthylen gelöst und bei 100 °C mit 0,025 Mol Terephthalsäuredichlorid und 0,025 Mol Isophthalsäuredichlorid (gelöst in 500 ml Tetrachloräthylen) umgesetzt. Nach einer Stunde wurden 2 Mol-% des obigen Bisphenol-Gemisches (bezogen auf die anfänglich eingesetzte Menge) und nach 15 min 5 Mol-% (bezogen auf die anfängliche Menge der Säurechloride) Benzoylchlorid zugegeben. Das Reaktionsgemisch wird in 10 l Methanol eingetragen, der ausgefallene Polyester abgetrennt, mit Wasser chloridfrei gewaschen und getrocknet.

Beispiel 2

Analog Beispiel 1 wurden 0,035 Mol Bisphenol A (2,2-Di-[4-hydroxyphenyl]-propan) statt Bisphenol O eingesetzt.

Beispiel 3

Zu 0,05 Mol Dihydroxy-triphenylphosphinoxid, gelöst in 0,32 Mol Pyridin und 100 ml Methylenchlorid wurde innerhalb einer Stunde bei Raumtemperatur eine Lösung von 0,025 Mol Terephthalsäuredichlorid und 0,025 Mol Isophthalsäuredichlorid zugetropft; anschliessend wurde zwei Stunden bei Raumtemperatur nachgerührt. Danach wurden zur Umsetzung von etwa noch vorhandenen Säurechlorid-Endgruppen weitere 2 Mol-% Dihydroxy-triphenylphosphinoxid (bezogen auf die anfänglich eingesetzte Menge) und zwecks Acetylierung der phenolischen Hydroxylengruppen nach 10 min 5 Mol-% Acetylchlorid (bezogen auf die anfängliche Menge der Säurechloride) zugesetzt. Der entstandene Polyester wurde in einem Methanol/Wasser-Gemisch ausgefällt, mit salzsaurem Wasser, danach mit destilliertem Wasser gewaschen und getrocknet.

Beispiel 4

Analog Beispiel 3 wurden 0,05 Mol Oxibis-(p-phenylencarbonylchlorid) statt des Iso/Terephthalsäuredichlorid-Gemisches eingesetzt. Der Polyester wurde zunächst aus Petroleumbenzin, anschliessend aus Methanol/Wasser gefällt.

Eigenschaften der nach den Beispielen 1 bis 4 erhaltenen Produkte.

| Beisp. Nr. | P-Gehalt (Gew.-% | Glastemperatur[1] (°C) | Zersetzungstemperatur[2] (°C) | CR-Wert[3] (%) | Kristallinität |
|---|---|---|---|---|---|
| 1 | 2,6 | 165 | 410 | 38 | schwach |
| 2 | 2,4 | 160 | 420 | 32 | teilkristallin |
| 4 | 7,2 | 175 | 400 | 36 | amorph |
| 5 | 5,8 | 125 | 390 | 37 | amorph |

[1] nach DSC
[2] nach DSC und TGA
[3] Pyrolyserückstand nach 30 min bei 800 °C unter $N_2$

**Patentansprüche**

1. Phosphorhaltige Polyarylenester der Struktur

$$-[O-A-O-CO-B-CO]_n-$$

worin A wenigstens zum Teil Glieder der Struktur I

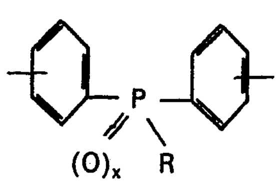

I

in der R einen niederen, gegebenenfalls chlorierten Alkylrest, einen Aryl- oder Aralkylrest, x=0 oder 1 bedeuten und die Arylgruppen gegebenenfalls weitere Substituenten tragen können, und gegebenenfalls zum übrigen Teil Glieder der für B angegebenen Struktur sind, und worin B zweiwertige aromatische Reste darstellen, n einen Mittelwert über 20 bedeutet und der Phosphorgehalt über 1 Gew.-% liegt, dadurch gekennzeichnet, dass die Glieder B aus wenigstens zwei verschiedenen Resten der Gruppe

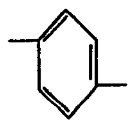

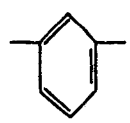

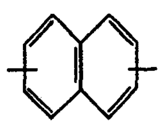

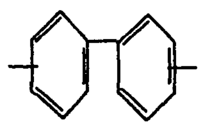

oder aus wenigstens einem Rest der Struktur

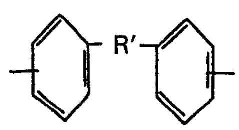

worin R' ein Sauerstoffatom, ein Schwefelatom, eine Sulfonyl-, Carbonyl- oder Isopropyliden-Brückengruppe darstellt, bestehen.

2. Verfahren zur Herstellung der phosphorhaltigen Polyarylenester gemäss Anspruch 1 durch Polykondensation von Bisphenolen HO–A–OH mit aromatischen Dicarbonsäuren HOCO–B–COOH, wobei A und B die im Anspruch 1 angegebene Bedeutung haben, oder von funktionellen Derivaten der genannten Bisphenole oder Dicarbonsäuren, die unter Ausbildung von Estergruppen kondensieren können.

3. Verfahren nach Anspruch 2, dadurch gekennzeichnet, dass als Derivate der aromatischen Carbonsäuren die entsprechenden Carbonsäurechloride ClCO–B–COCl eingesetzt und die Polykondensation in Gegenwart einer zu den Carbonsäurechloridgruppen wenigstens äquimolaren Menge einer Base durchgeführt wird.

**Revendications**

1. Polyesters d'arylène phosphorés de structure

$$-[O-A-O-CO-B-CO]_n-$$

dans laquelle les symboles A représentent, au moins en partie, des maillons de structure I

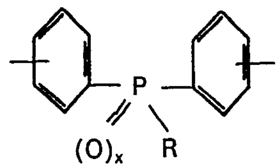
I

dans laquelle R est mis pour un radical alkyle inférieur, éventuellement chloré, un radical aryle ou aralkyle, x=0 ou 1 et les groupements aryle peuvent éventuellement porter d'autres substituants, et, le cas échéant, pour la partie restante, des maillons ayant la structure indiquée pour B, et dans laquelle les symboles B représentent des radicaux aromatiques bivalents, n a une valeur moyenne de plus de 20 et la teneur en phosphore est supérieure à 1% en poids, caractérisés en ce que les maillons B sont faits d'au moins deux radicaux différents du groupe

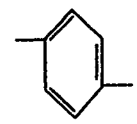

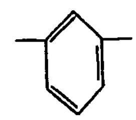

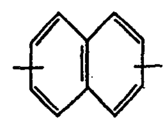

ou d'au moins un radical de structure

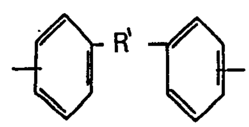

dans laquelle R' représente un atome d'oxygène, un atome de soufre, un groupe pontal sulfonyle, carbonyle ou isopropylidène.

2. Procédé pour la préparation des polyesters d'arylène phosphorés selon la revendication 1, par polycondensation de bisphénols HO–A–OH avec des acides dicarboxyliques aromatiques HOCO–B–COOH, A et B ayant les significations données dans la revendication 1, ou de dérives fonctionnels des bisphénols ou acides dicarboxyliques mentionnés, qui sont capables de se condenser avec formation de groupements ester.

3. Procédé selon la revendication 2, caractérisé en ce qu'on utilise, comme dérivés des acides carboxyliques aromatiques, les chlorures d'acides carboxyliques correspondants ClCO–B–COCl et en ce que la polycondensation est conduite en présence d'une quantité au moins équimolaire, par rapport aux groupements chlorure d'acide carboxylique, d'une base.

**Claims**

1. Phosphorus-containing polyarylene esters of structure

$-[O-A-O-CO-B-CO]_n-$

wherein A consists at least partly of components with the structure I

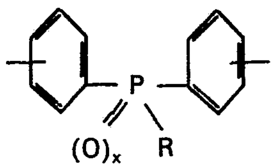

I

wherein R represents a lower, optionally chlorinated alkyl group or an aryl or aralkyl group, x=0 or 1 and the aryl groups may optionally carry further substituents, and optionally, for the remaining part, of components of the structure given for B, and wherein B represents divalent aromatic groups, n represents a mean value of over 20 and the phosphorus content is above 1% by weight, characterised in that the components B consist of at least two different groups selected from the following:

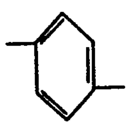

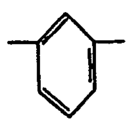

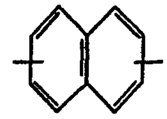

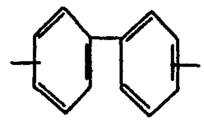

or of at least one group of the structure

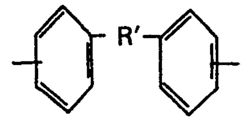

wherein R′ represents an oxygen atom, a sulphur atom, a sulphonyl, carbonyl or isopropylidene bridge group.

2. Process for preparing the phosphorus-containing polyarylene esters as claimed in claim 1 by polycondensation of bisphenols HO–A–OH with aromatic dicarboxylic acids HOCO–B–COOH, wherein A and B have the meanings given in claim 1, or functional derivatives of the abovementioned bisphenols or dicarboxylic acids, which may condense to form ester groups.

3. Process as claimed in claim 2, characterised in that the derivatives of the aromatic carboxylic acids used are the corresponding carboxylic acid chlorides ClCO–B–COCl and the polycondensation is carried out in the presence of a quantity of base which is at least equimolar to the carboxylic acid chloride groups.